# EUROPÄISCHE PATENTSCHRIFT

(11) **EP 0 375 923 B1**
(45) Veröffentlichungstag und Bekanntmachung des Hinweises auf die Patenterteilung: **27.04.1994**
(21) Anmeldenummer: 89121415.7
(22) Anmeldetag: 18.11.1989
(51) Int. Cl.: C08G 18/30, C08G 18/61, C08G 18/80, C09D 175/04

(54) **Gleitlack für Elastomerteile**
Slide coating for elastomer parts
Laque de glissement pour pièces élastomères

(30) Priorität: 26.11.1988 DE 3839937
(43) Veröffentlichungstag der Anmeldung: 04.07.1990
(73) Patentinhaber: Henkel Kommanditgesellschaft auf Aktien, 40191 Düsseldorf (DE)
(72) Erfinder: Seltmann, Hans-Günter, Dr., D-4000 Düsseldorf 13 (DE); Lippert, Hartmut, D-4019 Monheim (DE)

(56) Entgegenhaltungen:
- EP-A- 0 151 713
- EP-A- 0 217 364
- EP-A- 0 251 334
- EP-A- 0 293 084
- US-A- 4 098 742

## Beschreibung

Die Erfindung betrifft einen Polyurethanlack für Elastomere mit gleitverbessernden Zusätzen sowie ein Verfahren zu seiner Herstellung.

Für eine Vielzahl von technischen Anwendungen, beispielsweise für die Abdichtung von Fensterschächten für bewegliche Glasteile bei Automobilen, werden Elastomere benötigt, die neben ihren sonstigen bekannten günstigen Eigenschaften verbesserte Gleitfähigkeit gegenüber Glas aufweisen. Um Derartiges zu erzielen, war es bislang möglich, das Elastomerteil mit einem Lack zu beschichten, welcher fest gebundene Abstandshalter aus harten Materialien enthält. Als derartige Abstandshalter kommen Teilchen aus Glas, Aluminium, Polypropylen oder PVC in Betracht. Ein solches Verfahren ist z.B. in der Patentschrift DE 33 35 150 beschrieben.

Ein prinzipieller Nachteil besteht darin, daß die Berg-und-Tal-Struktur des Abstandshalter enthaltenden Lacks keine optimale Abdichtung bewirkt, so daß Fahrtwind eindringen kann und Geräusche verursacht werden, die nicht erwünscht sind. Desweiteren wird als Nachteil empfunden, daß die Oberfläche der so lackierten Elastomerteile keine optisch glatte, glänzende Oberfläche bildet, sondern wie feiner Schmiergelleinen aussieht.

Ein weiteres, in den Patentschriften US 45 72 872 und US 45 72 871 beschriebenes Verfahren besteht darin, dem Gleitlack Silikone und Fluorharze beizumengen. Derartige Lacke haben den Nachteil, daß sie unter extremen Witterungsbedingungen, wie Hitze, Kälte, Wind und Nässe, denen das Elastomerteil üblicherweise ausgesetzt ist, an den beigemengten Silikonen und Fluorharzen verarmen, was zu einer Verminderung der Gleitfähigkeit des Elastomerteils gegenüber Glas führt und unerwünscht ist. Desweiteren wird als Nachteil empfunden, daß es sich bei den Silikonen um Öle handelt, von denen bekannt ist, daß sie als Trennmittel wirken.

Derartige Trennmittel werden aufgrund ihrer charakteristischen Stoffeigenschaften relativ leicht verschleppt und können beispielsweise in der Montage, etwa beim Verkleben und beim Lackieren von Karosserieteilen, zu Schwierigkeiten führen. Der Einsatz und Gebrauch von nicht fixierten Silikonölen ist daher von den Automobilherstellern nicht erwünscht.

Wie in der nicht vor-veröffentlichten EP-Anmeldung 293 084 beschrieben, lassen sich Silikonöle dadurch fixieren, daß man reaktive Polysiloxane wählt, welche nahezu irreversibel einreagieren. Jedoch sind die Gleiteigenschaften derartiger Lacke noch verbesserungsbedürftig.

Ein-Komponenten Polyurethanlacke sind dem Elastomerfachmann seit Jahren bekannt. Es sei hier beispielsweise verwiesen auf G. Klement in Kautschuk und Gummi, Kunstoffe, Jahrgang 23 (1970), Heft 8, Seiten 375-378.

So wird in der EP-A-251 334 eine Zusammensetzung beschrieben, die durch Reaktion von Hydroxy-terminierten Perfluoropolyether, Siliko-carbinolen, Diisocyanaten und Polyolen in einem Lösungsmittel hergestellt wurde. Die molaren Anteile sind so gewählt, daß aus diesen reaktiven Komponenten ein NCO-terminiertes Prepolymer entsteht, welches als Film aufgetragen unter Einwirkung von Feuchtigkeit aushärtet. Es wurden alle 4 Komponenten gleichzeitig zur Reaktion gebracht.

Es ist somit Aufgabe der Erfindung, einen Lack für Elastomerteile zu schaffen, der verbesserte Gleiteigenschaften gegenüber Glas aufweist, nach einem einfachen Lackierverfahren aufgetragen wird, keine abrasive Wirkung gegenüber Glas zeigt, eine optisch glatte Oberfläche besitzt, wind- und wasserdicht am Glas anliegt, einfärbbar ist und von dauerhafter Beständigkeit.

Diese Aufgabe wurde gelöst durch einen feuchtigkeitshärtenden Ein-Komponenten Polyurethanlack zur Beschichtung von Elastomeren, bestehend aus mehrfunktionellen Isocyanatverbindungen, Lösungsmitteln sowie gewünschtenfalls Hilfsstoffen und/oder Haftverbesserern, dadurch gekennzeichnet, daß zur Gleitverbesserung reaktive Polysiloxane und reaktive Tenside enthalten sind.

Die erfindungsgemäßen feuchtigkeitshärtenden Ein-Komponenten-Polyurethanlacke enthalten als Bindemittel Polyurethanprepolymere mit im Mittel zwei oder mehr Isocyanatgruppen pro Molekül. Die Polyurethanprepolymeren werden hergestellt durch Vermischen von Alkoholen dar Funktionalität 2 und größer mit einem Überschuß an Isocyanatverbindungen der Funktionalität 2 und größer. Dabei kann durch die Wahl der Einsatzmengen die Viskosität der Produkte beeinflußt werden. Bei der Herstellung derartiger Polyurethanprepolymere für Lacke wird der Fachmann das Verhältnis so wählen, daß eine Viskosität eingestellt wird, die es erlaubt, daß Lacke mit 30-40 Gew.-% Polyurethanprepolymerenanteil noch durch Spritzen verarbeitet werden können. Ein günstiges Verhältnis von OH zu NCO liegt zwischen 1:1,3 und 1:1,8.

Zur Herstellung der Polyurethanprepolymeren sind in erster Linie Diisocyanate geeignet. Verwendet werden können ein- und mehrkernige aromatische Diisocyanate, cyclische aliphatische oder lineare aliphatische Diisocyanate. Beispielsweise seien aufgeführt Diphenylmethandiisocyanat, die isomeren Toluylendiisocyanate, Isophorondiisocyanat, Dicylohexylmethandiisocyanat, Tetramethylendiisocyanat oder Hexamethylendiisocyanat.

Als mehrfunktionelle Hydroxylkomponente können difunktionelle Alkohole wie beispielsweise Ethylenglykol, Propylenglykol, Neopentylglykol, 1,4-Butandiol, 1,6-Hexandiol sowie Triole wie Glycerin, Trimethylolpropan oder Trimethylolethan sowie höherfunktionelle Hydroxyverbindungen wie Pentaerythrit verwendet werden. Besonders geeignete difunktionelle Alkohole sind die Kondensationsprodukte der vorgenannten Verbindungen. So ist beispielsweise Polypropylenglykol mit durchschnittlichen Molgewichten von ca. 100 bis 10 000, vorzugsweise 800 bis 2 500 ein geeignetes Diol. Weitere geeignete Diole sind Polyethylenglycole im gleichen Molekulargewichtsbereich. Außer den genannten sind dem Fachmann auf dem Polyurethanlackgebiet noch zahlreiche andere geeignete Polyole bekannt, z.B. oleochemische Polyole oder Rizinusöl.

Die erfindungsgemäßen Polyurethanlacke enthalten weiterhin Lösungsmittel, welche insbesondere die Verarbeitung begünstigen. Geeignet sind hier organische Lösungsmittel, die nicht mit freien Isocyanatgruppen reagieren, das heißt Kohlenwasserstoffe, Ketone, Ester, Ether und/oder chlorierte Kohlenwasserstoffe. Besonders geeignet sind beispielsweise Xylol, Toluol, Methylisobutylketon und Methoxypropylacetat.

Die erfindungsgemäßen Lacke enthalten zur Verbesserung der Gleitfähigkeit reaktive Polysiloxane und reaktive Tenside. Derartige geeignete reaktive Polysiloxane sind bereits bekannt. Hierbei handelt es sich um Polysiloxane, die in der Kette oder Seitenkette über zumindest eine gegenüber isocyanatterminierten Lackbestandteilen und/oder den daraus in Folge der Feuchtigkeitshärtung gebildeten Verbindungen reaktionsfähige Gruppe verfügen, im wesentlichen um epoxymodifizierte Polysiloxane, um Polyhydrogenalkylsiloxane und/oder silanolmodifizierte Polysiloxane. Unter epoxymodifizierten Siloxanen versteht der Fachmann chemisch reaktive Silikonöle mit modifizierenden Epoxyalkyl-Seitengruppen.

Die erfindungsgemäßen Lacke können desweiteren als reaktives Polysiloxan Polymethylwasserstoffsiloxan, auch Polymethylhydrogensiloxan genannt, enthalten.

Desweiteren können als reaktive Polysiloxane silanolmodifizierte Siloxane eingesetzt werden. Dies sind Polyalkylsiloxanpolymere, die endständige Silanolgruppen besitzen. Diese Silanolöle sind als reaktive Analoge der üblichen Silikonöle anzusehen.

Die erfindungsgemäßen Lacke enthalten desweiteren zur Verbesserung der Gleitfähigkeit zusätzlich zu den reaktiven Siloxanen reaktive Tenside, fluorierte Tenside, insbesondere fluorierte nichtionische Tenside. Das Tensid weist erfindungsgemäß zumindest eine gegenüber isocyanatterminierten Lackbestandteilen und/oder den daraus in Folge der Feuchtigkeitshärtung gebildeten Verbindungen reaktive, funktionelle Gruppe, bevorzugt eine Hydroxylgruppe auf.

Erfindungsgemäß geeignete Tenside weisen einen perfluorierten Alkylrest mit 6-12 C-Atomen auf und besitzen in jedem Fall eine nicht-fluorierte hydrophile Gruppe. Als hydrophile Gruppe werden Oligomere des Ethylenoxyds bevorzugt, insbesondere solche, bei denen eine reaktive Gruppe vorzugsweise von dem Kohlenstoffatom getragen wird, welches im Molekül dem Alkylrest am weitesten entfernt und somit endständig ist.

Erfindungsgemäß geeignete Tenside mit nur einer, insbesondere endständigen reaktiven Gruppe werden deshalb bevorzugt, weil dadurch sichergestellt ist, daß diese Tenside so mit den NCO-terminierten Lackbestandteilen reagieren, daß sie jeweils das Ende eines polymeren Moleküls bilden. Dies wirkt sich besonders günstig auf die Gleiteigenschaften des Lackes aus. In einer weiteren bevorzugten Ausführungsform weisen die reaktiven Polysiloxane ebenfalls nur eine reaktive, insbesondere endständige, Gruppe auf, so daß diese Polysiloxane nach erfolgter Reaktion jeweils den Abschluß eines Makromoleküls des Lackes bilden.

Eine bevorzugte Ausführung verwendet nicht-ionische Fluortenside, mit einer gegenüber Isocyanaten reaktiven Gruppe, vorzugsweise einer Hydroxyl- oder Aminogruppe und mit einer nicht-fluorierten hydrophilen Gruppe auf der Basis des Oligomeren des Ethylenoxids, mit im Mittel 2 bis 50 Ethylenoxideinheiten pro Molekül, gewünschtenfalls zumindest teilweise ersetzbar durch Propylenoxideinheiten, so z.B. fluoriertes Alkylpolyoxyethylenethanol.

Die erfindungsgemäßen reaktiven Tenside werden in einer Menge von etwa 0,05 bis 5,0 Gew.-% eingesetzt. Um die sonstigen günstigen Eigenschaften des Lackes nicht zu verschlechtern, wird der Fachmann nicht mehr als 5 Gew.-% einsetzen. Bei weniger als 0,05 Gew.-% beginnen die Gleiteigenschaften allmählich nachzulassen. Ein bevorzugter Bereich ist daher zwischen 0,05 Gew.-% und 5 Gew.-%, insbesondere zwischen 0,1 Gew.-% und 2 Gew.-%. Die reaktiven Polysiloxane werden vorzugsweise in einer Menge von 0,1 bis 10 Gew.-% dem Lack beigefügt. Um dem Charakter des Lackes und seine sonstigen günstigen Eigenschaften nicht zu verändern, wird der Fachmann nicht mehr als 10 Gew.-% reaktive Polysiloxane einsetzen. Bei weniger als 0,1 Gew.-% werden die Gleiteigenschaften zunehmend schlechter. Ein bevorzugter Bereich ist daher zwischen 0,1 und 10 Gew.-%, insbesondere zwischen 0,5 bis 3 Gew.-%.

Die reaktiven Tenside wie auch die reaktiven Polysiloxane werden fest und weitestgehend irreversibel in den Lack eingebunden, so daß auch nach längerer Zeit und nachgestellten Witterungseinflüssen zumindest keine nennenswerte Verarmung des Lacks an diesen Substanzen zu verzeichnen ist.

Die erfindungsgemäßen Lacke können zur Verbesserung der Haftfestigkeit und Wasserbeständigkeit mehrfunktionelle aromatische Nitrosoverbindungen enthalten. Derartige Verbindungen sind bereits bekannt und deren Einsatz als Haftverbesserer für Elastomerlacke beispielsweise in der DE 34 00 852 beschrieben.

Geeignet sind hier insbesondere Dinitrosoverbindungen, bei denen die Nitrosogruppen an nicht benachbarten C-Atomen angebracht sind. Geeignet sind Dinitrosoverbindungen ein- und mehrkerniger Aromaten. Besonders bevorzugt sind die Dinitrosoverbindungen substituierter oder unsubstituierter einkerniger Aromaten, so beispielsweise m-Di-nitrosobenzol, p-Di-nitrosobenzol, m-Di-nitrosonaphthalin, p-Di-nitrosonaphtalin, 2,5-Di-nitroso-p-cumol, 2-Methyl-1,4-di-nitrosobenzol, 2-Methyl-5-chlor-1,4-dinitrosobenzol, 2-Fluor-1,4-di-nitrosobenzol, 2-Methoxy-1,3-dinitrosobenzol, 5-Chlor-1,3-dinitrosobenzol, 2-Benzyl-1,4-dinitrosobenzol und 2-Cyclohexyl-1,4-dinitrosobenzol.

Unter den genannten Verbindungen ist 1,4-Dinitrosobenzol bevorzugt. Eingesetzt werden kann sowohl die reine chemische Substanz als auch 1,4-dinitrosobenzol-haltige Zubereitungen, so z.B. Aufschlämmungen der Substanz in Lösungsmitteln mit einem Aktivsubstanzgehalt von 30-40 %. Derartige Aufschlämmungen werden im Handel angeboten.

Die erfindungsgemäßen Lacke können darüber hinaus weitere Hilfsstoffe enthalten. Dies sind beispielsweise Verzögerer, Beschleuniger, Stabilisatoren und Pigmente. Diese Hilfsstoffe sind dem Fachmann bekannt und in der Literatur auf dem Polyurethanlackgebiet beschrieben.

Zur Herstellung der erfindungsgemäßen Lacke kann von einem für Elastomere geigneten handelsüblichen Polyurethanlack ausgegangen werden, dem unter Rühren die reaktiven Polysiloxane und/oder reaktiven Tenside zugefügt werden können. Die Verarbeitung der erfindungsgemäßen Lacke, d.h. das Auftragen auf Elastomerteile, z.B. solche auf Basis Ethylenpropylendien (EPDM) oder Styrolbutadiengummi, sowie auf andere flexible Substrate, z.B. Polyurethan, kann in üblicher Weise z.B. durch Spritzen, Streichen oder Rakeln erfolgen.

### Beispiele

Für alle nachfolgend aufgeführten Beispiele wurde eine Spritzpistole, beispielsweise eine Walter-Pilot-III mit einer 1,0 oder einer 1,5 mm Düse bei einem Spritzdruck von 3 bar, verwendet. Auf diese Weise wurde der erfindungsgemäße Lack auf Elastomerteile auf Basis Ethylenpropylendien (EPDM) oder Styrolbutadiengummi aufgetragen. Die Elastomerteile wurden aus gängigen, dem Fachmann bekannten Kautschukmischungen, nach ebenfalls bekannten Vulkanisationstechniken hergestellt. Die Trocknung des Lackes erfolgte bei 160°C über einen Zeitraum von 5 Minuten.

Sämtliche der folgenden Beispiele wurden mit folgendem Standardansatz durchgeführt:
40,1 Gew.-T. Polypropylenglykol, Molekulargewicht 1025, OH-Z 109,6
238,0 Gew.-T. Polypropylenglykol, Molekulargewicht 2025, OH-Z 55,4
21,1 Gew.-T. Trimethylolpropan
195,8 Gew.-T. Diphenylmethandiisocyanat
125,0 Gew.-T. Xylol
125,0 Gew.-T. Toluol
220,0 Gew.-T. Methylisobutylketon (MIBK)
35,0 Gew.-T. Methoxypropylacetat (MPAc)
1̅0̅0̅0̅,̅0̅ G̅e̅w̅.̅-̅T̅.̅

In einem Reaktor wurden die Propylenglykole, die Lösungsmittel sowie Trimethylopropan und das Diisocyanat eingewogen. Es wurde sodann auf 90°C aufgeheizt und 3,5 Stunden bei dieser Temperatur gerührt. Danach wurde bei 50°C über Filter abgelassen. Anschließend wurden 1 Gew. -% 1,4-Dinitrosobenzol und 1 Gew.-% Farbruß (Spezialschwarz 4) zugesetzt. Der Lack wurde über eine Perlmühle abgerieben.

Die weiteren nachfolgend in den Beispielen aufgeführten Bestandteile wurden unter einem Schnellrührer dem Lack beigemengt.

Die bei den nachstehend aufgeführten Ausführungsbeispielen genannten Reibbeiwerte wurden an einer aus Glas bestehenden schiefen Ebene ermittelt. Dabei wurde wie folgt verfahren:

Die lackierte Gummiplatte (18 cm × 9 cm) wird bei Raumtemperatur mit einem Gewicht von 650 g belastet und auf eine mit Isopropanol gereinigte Glasplatte gelegt, die als schiefe Ebene ausgelegt ist. Es wird der kleinstmögliche, zwischen Gleitfläche und Horizontale gebildete Winkel α bestimmt, bei dem die Gummiplatte von selbst, d.h. nach Überwindung der Haftreibung, gleitet. Der Reibbeiwert ist als tan α definiert.

Die Bestimmung erfolgte jeweils
1. nach Trocknung des Lackes,
2. nach Wasserlagerung, d.h. das beschichtete Elastomerteil wurde drei Tage in Wasser bei 80°C gelagert,
3. nach Alterung, d.h. das beschichtete Elastomerteil wurde 24 Stunden bei 80°C im Umlufttrockenschrank gelagert.

### Beispiel 1

Zu dem oben genannten Standardansatz wurde 1 Gew.-% epoxymodifiziertes Polysiloxan und 0,2 Gew.-% fluoriertes Alkylpolyoxyethylenethanol zugesetzt und mit diesem erfindungsgemäßen Lack in der beschriebenen Weise ein Elastomerteil beschichtet. Nach Aushärtung betrug der Reibbeiwert 0,25, nach Wasserlagerung 0,30 und nach Alterung ebenfalls 0,30.

### Beispiel 2

Zu dem oben genannten Standardansatz wurde 0,5 Gew.-% epoxymodifiziertes Polysiloxan und 0,3 Gew.-% Fluortensid zugesetzt und mit diesem erfindungsgemäßen Lack in der beschriebenen Weise ein Elastomerteil beschichtet. Nach Aushärtung betrug der Reibbeiwert 0,30, nach Wasserlagerung 0,40 und nach Alterung ebenfalls 0,35.

### Beispiel 3

Zu dem oben genannten Standardansatz wurde 2 Gew.-% epoxymodifiziertes Polysiloxan und 0,1 Gew.-% Fluortensid zugesetzt und mit diesem erfindungsgemäßen Lack in der beschriebenen Weise ein Elastomerteil beschichtet. Nach Aushärtung betrug der Reibbeiwert 0,25, nach Wasserlagerung 0,30 und nach Alterung ebenfalls 0,30.

### Beispiel 4

Zu dem oben genannten Standardansatz wurde 3 Gew.-% Polyhydrogenmethylsiloxan und 0,2 Gew.-% Fluortensid zugesetzt und mit diesem erfindungsgemäßen Lack in der beschriebenen Weise ein Elastomerteil beschichtet. Nach Aushärtung betrug der Reibbeiwert 0,25, nach Wasserlagerung 0,30 und nach Alterung ebenfalls 0,30.

Zum Vergleich wurden nach dem gleichen, oben beschriebenen Verfahren folgende nicht erfindungsgemäße Systeme getestet und die unten genannten Ergebnisse erhalten:

### Vergleichsbeispiel 1

Ein unlackiertes Elastomerteil hat einen Reibbeiwert von 1,5.

### Vergleichsbeispiel 2

Ein nach dem Beflockungsverfahren beschichtetes Elastomerteil weist folgende Reibbeiwerte auf:
nach Aushärtung 0,25, nach Wasserlagerung 0,25 und nach Alterung 0,27.

### Vergleichsbeispiel 3

Ein Elastomerteil, welches mit dem wie vorstehend beschrieben hergestellten Standardlack beschichtet ist, weist folgende Reibbeiwerte auf:
nach Aushärtung 0,70, nach Wasserlagerung 0,70 nach Alterung 0,80.

### Vergleichsbeispiel 4

Ein Elastomerteil, welches mit einem handelsüblichen Lack, welcher Abstandshalter enthält, beschichtet ist, weist folgende Reibbeiwerte auf:
nach Aushärtung 0,30, nach Wasserlagerung 0,30 und nach Alterung 0,45.

### Vergleichsbeispiel 5

Zu dem obengenannten Standardansatz wurden 8 Gew.-% Polytetrafluorethylen zugesetzt und mit diesem Lack in der beschriebenen Weise ein Elastomerteil beschichtet. Nach Aushärtung betrug der Reibbeiwert 0,35, nach Wasserlagerung 0,35 und nach Alterung 0,35. Nach 100 Gleitvorgängen über Glas stieg der Reibbeiwert auf 0,5 an, da das Polytetrafluorethylen ausgerieben wird.

### Vergleichsbeispiel 6

Zum obengenannten Standardansatz wurde 1 % epoxymodifiziertes Polysiloxan zugesetzt und mit diesem Lack in der beschriebenen Weise ein Elastomerteil beschichtet. Nach Aushärtung betrug der Reibbeiwert 0,40, nach Wasserlagerung 0,40 und nach Alterung 0,50.

## Patentansprüche

1. Feuchtigkeitshärtende Ein-Komponenten-Polyurethanlacke zur Beschichtung von Elastomeren, enthaltend
- Polyurethanprepolymere mit im Mittel 2 oder mehr Isocyanatgruppen pro Molekül, hergestellt durch Vermischen von Alkoholen der Funktionalität 2 und größer mit einem Überschuß an Isocyanatverbindungen der Funktionalität 2 und größer und
- Lösungsmittel
dadurch gekennzeichnet, daß zur Gleitverbesserung reaktive Polysiloxane und reaktive Tenside eingesetzt werden, wobei die Tenside Verbindungen mit einem perfluorierten Alkylrest, welcher 6 bis 12 C-Atome enthält, und einer nicht-fluorierten hydrophilen Gruppe mit einer gegenüber isocyanatterminierten Lackbestandteilen reaktiven Gruppe sind.

2. Polyurethanlacke nach Anspruch 1, dadurch gekennzeichnet, daß Hilfsstoffe und/oder Haftverbesserer enthalten sind.

3. Polyurethanlacke nach einem der vorstehenden Ansprüche, dadurch gekennzeichnet, daß reaktive Polysiloxane in Mengen von 0,1 bis 10 Gew.-%, und reaktive Tenside in Mengen von 0,05 bis 5 Gew.-%, enthalten sind.

4. Polyurethanlacke nach einem der vorstehenden Ansprüche, dadurch gekennzeichnet, daß als fluorierte nicht-ionische Tenside solche mit einer nicht-fluorierten hydrophilen Gruppe auf der Basis des Oligomeren des Ethylenoxids, mit im Mittel 2 bis 50 Ethylenoxideinheiten pro Molekül, und mit einer Hydroxyl- und/oder Aminogruppe enthalten sind.

5. Polyurethanlacke mit einem der vorstehenden Ansprüche, dadurch gekennzeichnet, daß die Hydroxyl- und/oder Aminogruppe vorzugsweise endständig angeordnet ist.

6. Polyurethanlacke nach einem der vorstehenden Ansprüche, dadurch gekennzeichnet, daß die Ethylenoxideinheiten der nicht-fluorierten hydrophilen Gruppe des fluorierten nicht-ionischen Tensids zumindest teilweise durch Propylenoxideinheiten ersetzt sind.

7. Polyurethanlacke nach einem der vorstehenden Ansprüche, dadurch gekennzeichnet, daß die reaktiven Polysiloxane eine oder mehrere funktionelle Gruppen aufweisen, die mit den Isocyanat-terminierten Lackbestandteilen und/oder den daraus in Folge der Feuchtigkeitshärtung gebildeten Verbindungen reagieren können.

8. Polyurethanlacke nach einem der vorstehenden Ansprüche, dadurch gekennzeichnet, daß als reaktive Polysiloxane epoxymodifizierte Polysiloxane, Polyhydrogenalkylsiloxane und/oder silanolmodifizierte Polysiloxane enthalten sind.

9. Polyurethanlacke nach einem der vorstehenden Ansprüche, dadurch gekennzeichnet, daß Polyurethanprepolymere auf Basis aliphatischer und/oder aromatischer Diisocyanate und aliphatischer di- und/oder trifunktioneller Alkohole und/oder Etheralkohole enthalten sind.

10. Polyurethanlacke nach einem der vorstehenden Ansprüche, dadurch gekennzeichnet, daß als Haftverbesserer Di-Nitrosoverbindungen ein- oder mehrkerniger, gewünschtenfalls substituierter Aromaten mit mindestens zwei Nitrosogruppen an nicht benachbarten C-Atomen enthalten sind.

11. Polyurethanlacke nach einem der vorstehenden Ansprüche, dadurch gekennzeichnet, daß als weitere Hilfsstoffe Pigmente, Beschleuniger und/oder Substanzen zur Verhinderung der Blasenbildung enthalten sind.

12. Verwendung der Polyurethanlacke nach Ansprüchen 1 bis 14 zur Beschichtung von Elastomeren, insbesondere unpolaren Elastomeren wie Styrolbutadiengummi oder Elastomeren auf Basis von Polyethylenpropyldienen (EPDM), sowie anderen flexiblen Substraten, insbesondere Polyurethanen.

13. Verfahren zur Herstellung eines gleitfähigkeitsverbesserten Polyurethanlackes für Elastomere, dadurch gekennzeichnet, daß feuchtigkeitshärtende Einkomponenten-Polyurethanlacke zur Beschichtung von Elastomeren, enthaltend
- Polyurethanprepolymere mit im Mittel 2 oder mehr Isocyanatgruppen pro Molekül hergestellt durch Vermischen von Alkoholen der Funktionalität 2 und größer mit einem Überschuß an Isocyanatverbindungen der Funktionalität 2 und größer und
- Lösungsmitteln
- gewünschtenfalls Hilfsstoffen
- gewünschtenfalls Haftverbessern
mit reaktiven Polysiloxanen und reaktiven Tensiden innig vermengt werden, wobei die Tenside Verbindungen mit einem perfluorierten Alkylrest, welcher 6 bis 12 C-Atome enthält, und einer nicht-fluorierten hydrophilen Gruppe mit einer gegenüber isocyanatterminierten Lackbestandteilen reaktiven Gruppe sind.

## Claims

1. Moisture-curing one-component polyurethane paints for coating elastomers, containing
- polyurethane prepolymers containing on average two or more isocyanate groups per molecule prepared by mixing of alcohols having a functionality of 2 and higher with an excess of isocyanate compounds having a functionality of 2 and higher and
- solvents,
characterized in that reactive polysiloxanes and reactive surfactants are present for improving surface slip, the surfactants being compounds containing a perfluorinated C₆₋₁₂ alkyl radical and a non-fluorinated hydrophilic group bearing a group reactive to isocyanate-terminated paint constituents.

2. Polyurethane paints as claimed in claim 1, characterized in that auxiliaries and/or coupling agents are present.

3. Polyurethane paints as claimed in any of the preceding claims, characterized in that they contain reactive polysiloxanes in quantities of 0.1 to 10% by weight and reactive surfactants in quantities of 0.05 to 5% by weight.

4. Polyurethane paints as claimed in any of the preceding claims, characterized in that the fluorinated non-ionic surfactants present are those containing a non-fluorinated hydrophilic group based on the oligomer of ethylene oxide with on average 2 to 50 ethylene oxide units per molecule and with a hydroxyl and/or amino group.

5. Polyurethane paints as claimed in any of the preceding claims, characterized in that the hydroxyl and/or amino group is preferably terminally positioned.

6. Polyurethane paints as claimed in any of the preceding claims, characterized in that the ethylene oxide units of the non-fluorinated hydrophilic group of the fluorinated nonionic surfactant are at least partly replaced by propylene oxide units.

7. Polyurethane paints as claimed in any of the preceding claims, characterized in that the reactive polysiloxanes contain one or more functional groups which are capable of reacting with the isocyanate-terminated paint constituents and/or with the compounds formed therefrom as a result of the moisture curing process.

8. Polyurethane paints as claimed in any of the preceding claims, characterized in that the reactive polysiloxanes present are epoxy-modified polysiloxanes, polyhydrogen alkyl siloxanes and/or silanol-modified polysiloxanes.

9. Polyurethane paints as claimed in any of the preceding claims, characterized in that they contain a polyurethane prepolymer based on aliphatic and/or aromatic diisocyanates and aliphatic difunctional and/or trifunctional alcohols and/or ether alcohols.

10. Polyurethane paints as claimed in any of the preceding claims, characterized in that the coupling agents are dinitroso compounds of mononuclear or polynuclear, optionally substituted aromatics containing at least two nitroso groups at non-adjacent carbon atoms.

11. Polyurethane paints as claimed in any of the preceding claims, characterized in that they contain pigments, accelerators and/or substances for preventing bubble formation as further auxiliaries.

12. The use of the polyurethane paints claimed in claims 1 to 11 for coating elastomers, particularly apolar elastomers, such as styrene-butadiene rubber, or elastomers based on polyethylene-propylene-dienes (EPDM) and other flexible substrates, particularly polyurethanes.

13. A process for the production of a polyurethane paint having improved surface-slip properties for elastomers, characterized in that moisture-curing one-component polyurethane paints containing
- polyurethane prepolymers containing on average two or more isocyanate groups per molecule prepared by mixing of alcohols having a functionality of 2 and higher with an excess of isocyanate compounds having a functionality of 2 and higher and
- solvents,
- optionally auxiliaries and
- optionally coupling agents
are thoroughly mixed with reactive polysiloxanes and reactive surfactants, the surfactants being compounds containing a perfluorinated C₆₋₁₂ alkyl radical and a non-fluorinated hydrophilic group bearing a group reactive to isocyanate-terminated paint constituents.

## Revendications

1. Laques de polyuréthanne à un composant qui durcissent à l'humidité en vue du recouvrement d'élastomères, formées :
- de prépolymères de polyuréthanne avec en moyenne 2 ou plus groupes isocyanate par molécule, produits par mélange d'alcools de fonctionnalité 2 et plus, avec un excès de composés isocyanate de fonctionnalité 2 et plus, et
- d'un solvant,
caractérisées en ce qu'on met en oeuvre des polysiloxanes réactifs et des agents tensio-actifs réactifs en vue de l'amélioration du glissement, tandis que les agents tensio-actifs sont des composés ayant un reste alcoyle perfluoré qui contient de 6 à 12 atomes de carbone et un groupe hydrophile non fluoré avec un groupe réactif vis-à-vis des constituants de laque terminés par un isocyanate.

2. Laques de polyuréthanne selon la revendication 1, caractérisées en ce que des substances auxiliaires et/ou des agents qui améliorent l'adhérence y sont contenus.

3. Laques de polyuréthanne selon l'une des revendications précédentes, caractérisées en ce que des polysiloxanes réactifs y sont contenus en quantités allant de 0,1 à 10 % en poids et que des agents tensio-actifs y sont contenus en quantités allant de 0,05 à 5 % en poids.

4. Laques de polyuréthanne selon l'une des revendications précédentes, caractérisées en ce que comme agents tensio-actifs non ioniques fluorés, ceux ayant un groupe hydrophile non fluoré à base de l'oligomère de l'oxyde d'éthylène, avec en moyenne de 2 à 50 motifs d'oxyde d'éthylène par molécule et ayant un groupe hydroxyle et/ou un groupe amino, y sont inclus.

5. Laques de polyuréthanne selon l'une des revendications précédentes, caractérisées en ce le groupe hydroxyle et/ou le groupe amino sont disposés de préférence d'une manière terminale.

6. Laques de polyuréthanne selon l'une des revendications précédentes, caractérisées en ce que les unités d'oxyde d'éthylène du groupe hydrophile non fluoré de l'agent tensio-actif non ionique fluoré sont remplacées au moins partiellement par des unités d'oxyde de propylène.

7. Laques de polyuréthanne selon l'une des revendications précédentes, caractérisées en ce que les polysiloxanes réactifs possèdent un ou plusieurs groupes fonctionnels, qui peuvent réagir avec les constituants de laque terminés par un isocyanate et/ou avec les composés formés à partir de cela comme conséquence du durcissement à l'humidité.

8. Laques de polyuréthanne selon l'une des revendications précédentes, caractérisées en ce que comme polysiloxanes réactifs, des polysiloxanes modifiés par un époxy, des polyhydrogénoalcoylsiloxanes, et/ou des polysiloxanes modifiés par un silanol sont inclus.

9. Laques de polyuréthanne selon l'une des revendications précédentes, caractérisées en ce que des prépolymères de polyuréthanne à base de diisocyanate aliphatiques et/ou aromatiques et d'alcools di- et trifonctionnels aliphatiques et/ou d'alcooléthers sont inclus.

10. Laques de polyuréthanne selon l'une des revendications précédentes, caractérisées en ce que, comme agent améliorant l'adhésivité, on inclut des composés di-nitroso, des aromatiques à un ou plusieurs noyaux, si désiré substitués, ayant au moins deux groupes nitroso sur des atomes de Carbone qui ne sont pas voisins.

11. Laques de polyuréthanne selon l'une des revendications précédentes, caractérisées en ce que l'on inclut comme substances auxiliaires supplémentaires, des pigments, des accélérateurs et/ou des substances pour l'inhibition de la formation de bulles.

12. Utilisation des laques de polyuréthanne selon les revendications 1 à 11 en vue du recouvrement d'élastomères, en particulier d'élastomères non polaires comme le caoutchouc de styrène butadiène ou d'élastomères à base de polyéthylènepropyldiènes (EPDM) ainsi que d'autres substances flexibles, en particulier des polyuréthannes.

13. Procédé d'obtention d'une laque de polyuréthanne améliorée quant à son aptitude au glissement pour des élastomères, caractérisé en ce que des laques de polyuréthanne à un composant qui durcissent à l'humidité, en vue du recouvrement d'élastomères, contenant :
- des prépolymères de polyuréthanne ayant en moyenne 2 ou plus groupes isocyanates par molécule, obtenus par mélange d'alcools de fonctionnalité 2 et plus, avec un excès de composés isocyanates de fonctionnalité 2 et plus, et
- des solvants,
- des substances auxiliaires, si désiré,
- des agents d'amélioration de l'adhésion, si désiré, sont mélangées intimement avec des polysiloxanes réactifs et des agents tensio-actifs réactifs, tandis que les agents tensio-actifs sont des composés ayant un radical alcoyle perfluoré, qui contient de 6 à 12 atomes de Carbone et ayant un groupe hydrophile non fluoré avec un groupe réactif vis-à-vis des constituants de la laque, terminés par un isocyanate.
